# EUROPEAN PATENT APPLICATION

(11) **EP 1 465 096 A1**
(43) Date of publication of application: **06.10.2004**
(21) Application number: 04005911.5
(22) Date of filing: 12.03.2004
(51) Int. Cl.: G06F 17/60

(54) **Shared business constituent model**

(30) Priority: 12.03.2003 US 454242 P; 18.02.2004 US 781600
(71) Applicant: MICROSOFT CORPORATION, Redmond, Washington 98052 (US)
(72) Inventor: Munson, Ryan Alan, Fargo, ND 58104 (US); Hensel, Jeffrey D., Fargo, ND 58103 (US); Trosen, Jeffrey A., West Fargo, ND 58078 (US); Kamstra, Jeff L., Fargo, ND 58104 (US); Anderson, Daryl Wayne, Horace, ND 58047 (US)
(74) Representative: Grünecker, Kinkeldey, Stockmair & Schwanhäusser Anwaltssozietät

(57) **Abstract**

A data organization scheme for business applications is disclosed wherein a shared core set of constituent data is centrally maintained for an individual or organization that takes on multiple roles. Additional data that is specific to the roles is separately maintained. The constituent data organization subsystem provides a means to track organizations and individuals as unique entities, as well as to manage the diffuse and context-dependent ways in which they represent themselves within a system. Also disclosed are specific security, data analysis and other features enabled through an implementation of the proposed constituent data organization scheme.

## Description

### BACKGROUND OF THE INVENTION

The present invention generally pertains to software systems for managing businesses. More particularly, the present invention pertains to methods and systems for data organization in the context of business software applications.

Companies currently vary in size from very large and diverse organizations to very small and atomic organizations. However, regardless of the size of the company, operational rules are typically implemented for business management purposes. Many companies employ software systems to monitor application of the operational rules, and to track a wide variety of company information. Organization structure and customer management applications are known in the art for such purposes.

The software systems implemented by companies are commonly designed to track legal organizations and persons in the context of various roles. The roles typically are associated with a business document or process. Examples of roles include contacts, customers, vendors, employees, users and salespeople. It is typical that properties are tracked on a role-specific basis in order to support one or more specific business processes.

Traditionally, within business applications, each role corresponds to a discrete set of properties. Many of the properties that are tracked in association with one role (e.g., customer) are commonly quite different than properties tracked with another (e.g., employee). On the other hand, it is also common for there to be overlap between roles (i.e., the same properties are tracked from role to role). Despite overlap, the standard method of creating records has generally been to track a relatively complete collection of data for each role. While this works reasonably well when the data being tracked for one role has no source relation to data tracked for other roles, numerous inefficiencies result when a single individual or organization takes on multiple roles within the same system. Also, maintaining relatively independent records for multiple instances of the same individual or organization often makes it complicated or inefficient to track data relationships between related role records.

Similar challenges are encountered in a context wherein multiple businesses implement a related set of business applications. For example, if a given customer does business with two business organizations within the same company, and assuming that each of the two organizations implement a separate instance of a business application, two instances of the customer record may very well be created (i.e., one for each business organization). For this customer, subsequent data management can be inefficient and cumbersome. For example, subsequent changes in customer data commonly must be updated to both instances of the customer record.

### SUMMARY OF THE INVENTION

Embodiments of the present invention pertain to a data organization scheme for business applications wherein a shared core set of constituent data is centrally maintained for an individual or organization that takes on multiple roles. Additional data that is specific to the roles is separately maintained. The constituent data organization subsystem provides a means to track organizations and individuals as unique entities, as well as to manage the diffuse and context-dependent ways in which they represent themselves within a system. Other embodiments pertain to specific security, data analysis and other features enabled through an implementation of the proposed constituent data organization scheme.

### BRIEF DESCRIPTION OF THE DRAWINGS

FIG. 1 is a block diagram of one computing environment in which embodiments of the present invention may be implemented.
FIG. 2 is a block diagram of a data organization system.
FIG. 3 is a flow chart illustrating steps associated with generating a plurality of role-specific records.
FIG. 4 is a block diagram of one embodiment of a constituent record database.
FIG. 5 is a data object diagram related to the data organization system.
FIG. 6 is a flow chart illustrating steps associated with accessing constituent and role-specific data.
FIGS. 7-10 are exemplary screenshots.

### DETAILED DESCRIPTION OF ILLUSTRATIVE EMBODIMENTS

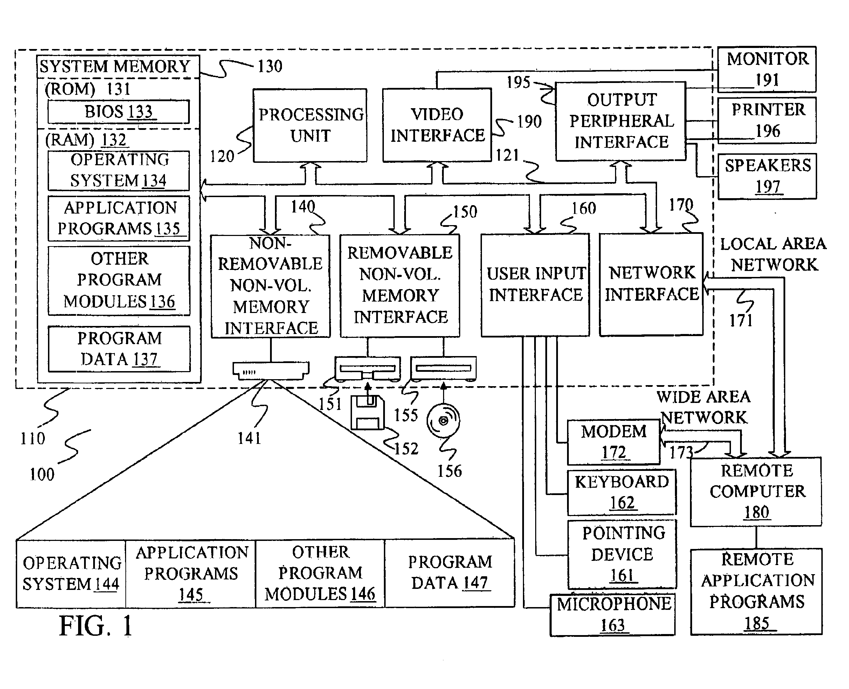

FIG. 1 illustrates an example of a suitable computing system environment 100 within which embodiments of the present invention may be implemented. The computing system environment 100 is only one example of a suitable computing environment and is not intended to suggest any limitation as to the scope of use or functionality of the invention. Neither should the computing environment 100 be interpreted as having any dependency or requirement relating to any one or combination of components illustrated in the exemplary operating environment 100.

The invention is operational with numerous other general purpose or special purpose computing system environments or configurations. Examples of well-known computing systems, environments, and/or configurations that may be suitable for use with the invention include, but are not limited to, personal computers, server computers, hand-held or laptop devices, multiprocessor systems, microprocessor-based systems, set top boxes, programmable consumer electronics, network PCs, minicomputers, mainframe computers, telephony systems, distributed computing environments that include any of the above systems or devices, and the like.

The invention may be described in the general context of computer-executable instructions, such as program modules, being executed by a computer. Generally, program modules include routines, programs, objects, components, data structures, etc. that perform particular tasks or implement particular abstract data types. The invention may also be practiced in distributed computing environments where tasks are performed by remote processing devices that are linked through a communications network. In a distributed computing environment, program modules may be located in both local and remote computer storage media including memory storage devices.

With reference to FIG. 1, an exemplary system for implementing the invention includes a general-purpose computing device in the form of a computer 110. Components of computer 110 may include, but are not limited to, a central processing unit 120, a system memory 130, and a system bus 121 that couples various system components including the system memory to the processing unit 120.

The system bus 121 may be any of several types of bus structures including a memory bus or memory controller, a peripheral bus, and a local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus also known as Mezzanine bus.

Computer 110 typically includes a variety of computer readable media. Computer readable media can be any available media that can be accessed by computer 110 and includes both volatile and nonvolatile media, removable and non-removable media. By way of example, and not limitation, computer readable media may comprise computer storage media and communication media. Computer storage media includes both volatile and nonvolatile, removable and non-removable media implemented in any method or technology for storage of information such as computer readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computer 110. Communication media typically embodies computer readable instructions, data structures, program modules or other data in a modulated data signal such as a carrier wave or other transport mechanism and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer readable media.

The system memory 130 includes computer storage media in the form of volatile and/or nonvolatile memory such as read only memory (ROM) 131 and random access memory (RAM) 132. A basic input/output system 133 (BIOS), containing the basic routines that help to transfer information between elements within computer 110, such as during start-up, is typically stored in ROM 131. RAM 132 typically contains data and/or program modules that are immediately accessible to and/or presently being operated on by processing unit 120. By way of example, and not limitation, FIG. 1 illustrates operating system 134, application programs 135, other program modules 136, and program data 137.

The computer 110 may also include other removable/non-removable volatile/nonvolatile computer storage media. By way of example only, FIG. 1 illustrates a hard disk drive 141 that reads from or writes to non-removable, nonvolatile magnetic media, a magnetic disk drive 151 that reads from or writes to a removable, nonvolatile magnetic disk 152, and an optical disk drive 155 that reads from or writes to a removable, nonvolatile optical disk 156 such as a CD ROM or other optical media. Other removable/non-removable, volatile/nonvolatile computer storage media that can be used in the exemplary operating environment include, but are not limited to, magnetic tape cassettes, flash memory cards, digital versatile disks, digital video tape, solid state RAM, solid state ROM, and the like. The hard disk drive 141 is typically connected to the system bus 121 through a non-removable memory interface such as interface 140, and magnetic disk drive 151 and optical disk drive 155 are typically connected to the system bus 121 by a removable memory interface, such as interface 150.

The drives and their associated computer storage media discussed above and illustrated in FIG. 1, provide.storage of computer readable instructions, data structures, program modules and other data for the computer 110. In FIG. 1, for example, hard disk drive 141 is illustrated as storing operating system 144, application programs 145, other program modules 146, and program data 147. Note that these components can either be the same as or different from operating system 134, application programs 135, other program modules 136, and program data 137. Operating system 144, application programs 145, other program modules 146, and program data 147 are given different numbers here to illustrate that, at a minimum, they are different copies.

A user may enter commands and information into the computer 110 through input devices such as a keyboard 162, a microphone 163, and a pointing device 161, such as a mouse, trackball or touch pad. Other input devices (not shown) may include a joystick, game pad, satellite dish, scanner, or the like. These and other input devices are often connected to the processing unit 120 through a user input interface 160 that is coupled to the system bus, but may be connected by other interface and bus structures, such as a parallel port, game port or a universal serial bus (USB). A monitor 191 or other type of display device is also connected to the system bus 121 via an interface, such as a video interface 190. In addition to the monitor, computers may also include other peripheral output devices such as speakers 197 and printer 196, which may be connected through an output peripheral interface 190.

The computer 110 may operate in a networked environment using logical connections to one or more remote computers, such as a remote computer 180. The remote computer 180 may be a personal computer, a hand-held device, a server, a router, a network PC, a peer device or other common network node, and typically includes many or all of the elements described above relative to the computer 110. The logical connections depicted in FIG. 1 include a local area network (LAN) 171 and a wide area network (WAN) 173, but may also include other networks. Such networking environments are commonplace in offices, enterprise-wide computer networks, intranets and the Internet.

When used in a LAN networking environment, the computer 110 is connected to the LAN 171 through a network interface or adapter 170. When used in a WAN networking environment, the computer 110 typically includes a modem 172 or other means for establishing communications over the WAN 173, such as the Internet. The modem 172, which may be internal or external, may be connected to the system bus 121 via the user input interface 160, or other appropriate mechanism. In a networked environment, program modules depicted relative to the computer 110, or portions thereof, may be stored in the remote memory storage device. By way of example, and not limitation, FIG. 1 illustrates remote application programs 185 as residing on remote computer 180. It will be appreciated that the network connections shown are exemplary and other means of establishing a communications link between the computers may be used.

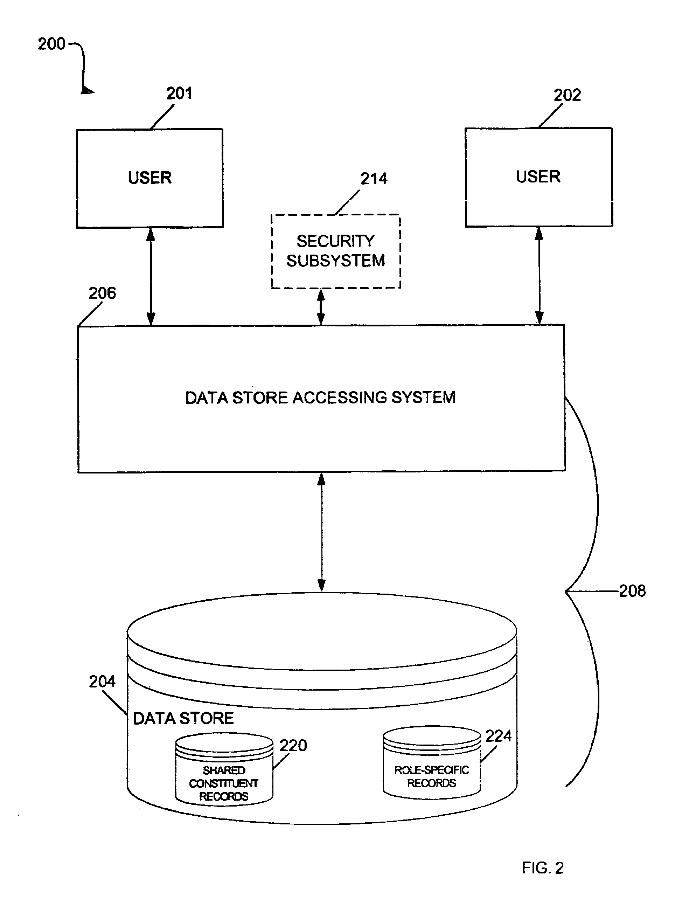

FIG. 2 is a block diagram of a data organization system 200 in accordance with one aspect of the present invention. System 200 is illustratively implemented in conjunction with any of a variety to suitable business software application interfaces, such as, but not limited to, an application designed for the business management of organization structure and/or customer relationship information. However, without departing from the scope of the present invention, data organization system 200 could just as easily be implemented in conjunction with any other software application interface.

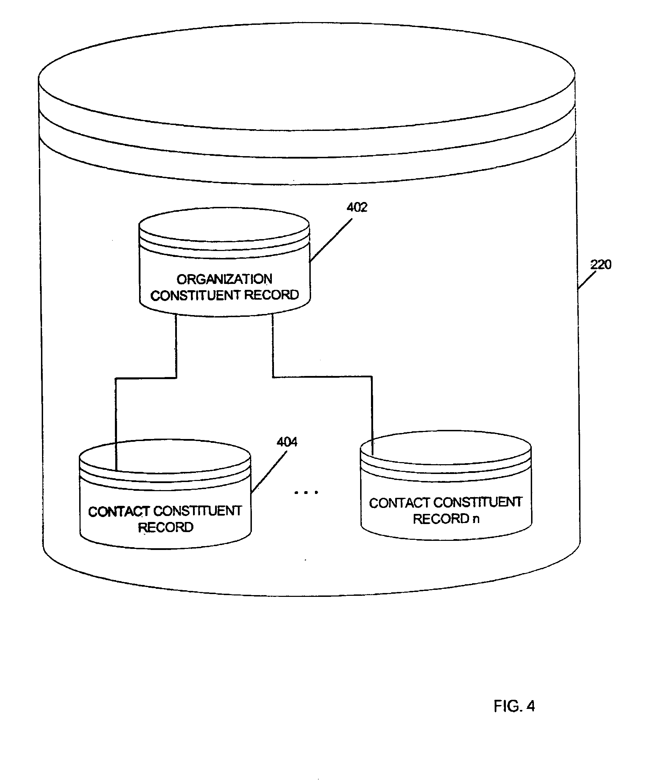

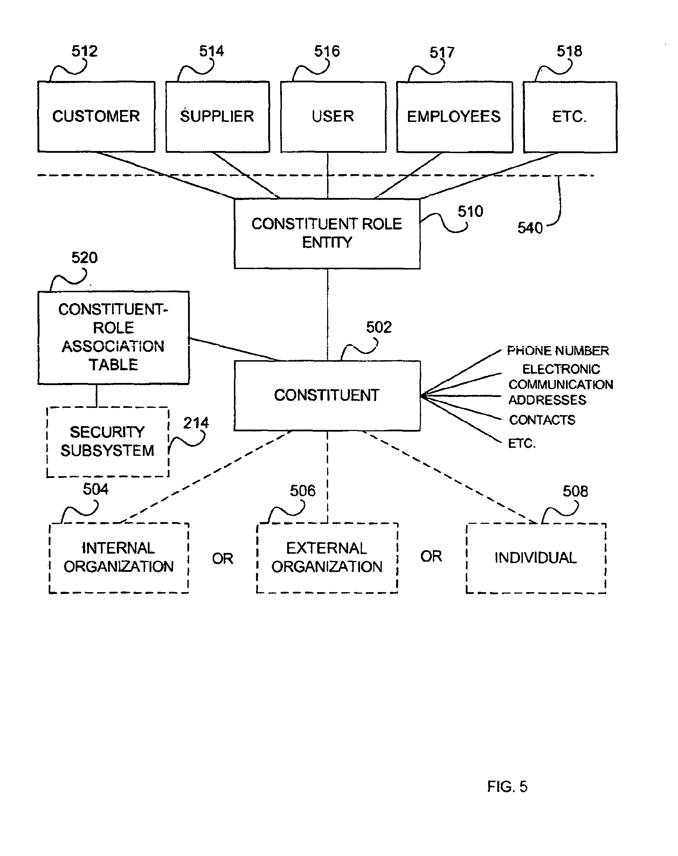

System 200 includes users 201 and 202 that interact with a data store 204 through a data store accessing system 206. In accordance with one embodiment, users 201 and 202 first authenticate themselves (e.g., through any known means for logging in) in order to demonstrate authorization to access data in store 204. Based on the authentication, optional security subsystem 214 limits access to data store 204 generally and/or to specific data components thereof. Illustrative details of the operation of security subsystem 214, which is illustratively implemented as an access security subsystem for a software application interface, will be described in greater detail in relations to FIGS. 4 and 5.

Data store 204 and accessing system 206 together form a data store accessing subsystem 208 that is illustratively implemented as a subsystem for a software application interface. Collectively, subsystem 208 can, for example, be implemented as a relational database system, or an object-relational database system, or an object oriented database system, or any other suitable data management system. In one embodiment, data store 204 stores data in relational tables while data store accessing system 206 receives queries from users 201 and 202 in terms of business entities (or objects). Accessing system 206 then converts those queries into relational database statements for accessing data from data store 204.

In accordance with one aspect of the present invention, the data in store 204 includes a plurality of shared constituent records 220. Each shared constituent record 220 illustratively corresponds to an organization or individual herein referred to as a constituent. Examples of constituents include, but are not limited to, users, customers, vendors, employees and salespeople. Users 201 and 202 can themselves be affiliated with one or more constituents.

In the context of many traditional systems, a separate record is maintained in a data store for each role assumed by an individual or organization. Duplication of data is generally not of concern. Even when multiple records (i.e., based on multiple roles) are generated for the same individual or organization, each record will generally include similar fundamental data such as identity, location, and/or information relative to business preferences (e.g., currency used, payment terms, credit limits, preferred communications, etc.). Accordingly, when a single organization or individual interacts in multiple capacities (e.g., a vendor that is also a customer), then a separate record is generated for each capacity regardless of data duplication. In some cases, some sort of notation is included to point to an associated record but this does not eliminate data duplication.

In contrast to the traditional design, in accordance with one aspect of the present invention, shared constituent record 220 is maintained for each constituent. In instances wherein a constituent interacts in more than one capacity, each record 220 will contain properties that are consistent across multiple roles. In accordance with one embodiment, properties that are role-specific are separately maintained in role-specific records 224. An individual or organization interacting in multiple capacities will illustratively have a role-specific record 224 for each capacity.

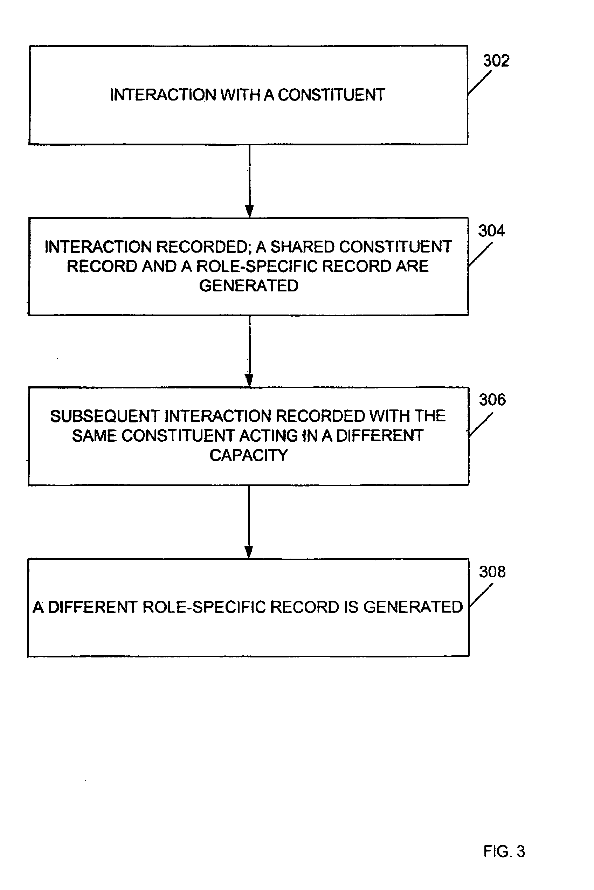

FIG. 3 is a block flow chart illustrating steps associated with an implementation of data organization system 200. For the purpose of further illuminating the design of system 200, the flow of the FIG. 3 chart will be described in relation to a specific illustrative example. In accordance with the example, user 201 is a customer service representative (CSR) and user 202 is a purchasing agent (PA). Both users are employed by a small clothing store that provides custom screen-printing and embroidery services. The described example is but one scenario for which the present invention provides a solution. Of course, the same solution can be provided in any of a variety of other scenarios without departing from the scope of the present invention.

In his job as a CSR, user 201 is illustratively responsible for setting up customer records when new trading partners want to buy products or services from the store. He also manages the quote and order process for new and existing customers and handles most aspects of customer interaction. In accordance with block 302 in FIG. 3, user 201 receives a call from a Company A that would like to buy embroidered caps. Since Company A has not done business with his company before, user 201 logs into a business software application interface and, assuming proper authorization, proceeds to interact with accessing system 206 in order to create a new customer record in data store 204. In accordance with block 304, when the new record is saved in data store 204, the system will have created a customer record 224, as well as a core constituent record 220 for Company A as an organization constituent.

Within her role as purchasing agent, user 202 illustratively has responsibility for creating purchase orders for materials needed for stock as well as for ordering maintenance, repair and operating supplies for the store. Implicit within the role of PA is the management of vendor information within system 200. User 202 illustratively decides to finalize a new vendor for the provision of office supplies. In accordance with step 306, user 202 contacts Company A to set up a business arrangement for supply of the new supplies. Accordingly, assuming log-in and proper authorization, user 202 interacts with subsystem 208 through a business software application interface in order to set up a new vendor record.

As user 202 enters in the organization name of Company A, she is illustratively given a list of existing constituents that closely match that name. By visually matching the main address of Company A, she selects that constituent as the vendor she is creating. She continues through the vendor setup and provides all additional information required for creating a vendor record 224 for Company A. Under these circumstances, a new constituent record 220 need not be created for user 202. However, in accordance with block 308, a vendor record 224 will be created for Company A. Company A becomes an organization constituent that plays two constituent roles in the data organization system, namely, customer and vendor.

In accordance with one embodiment, users 201 and 202 interact with the same software application. In accordance with another embodiment, they each interact with separate applications that implement the same data accessing subsystem 208.

Another example will demonstrate a beneficial extensibility of data organization system 200. In this example, user 201 and 202 are separate business software applications implemented by two separate companies within the same organization, wherein both utilize the same data accessing subsystem 208. A single customer (not shown) illustratively interacts with users 201 and 202 on different occasions. In a traditional system, two relatively identical instances of the same customer record may be generated (i.e., one for each user). However, in accordance with the present invention, the second acting user will encounter a shared constituent record 220 created by the first acting user. Accordingly, the second acting user will not be required to re-collect data that is common to both interactions. A single customer record 224 containing less common data could be generated and shared by both users 201 and 202 or, alternatively, a separate customer record 224 could be maintained for each user. This is but one additional example scenario to which the present invention can be applied.

There are many benefits inherent to the described data organization system. One key benefit is a reduction in data entry effort. Once a person or organization is known within the system as being associated with any constituent role, it will require much less effort to create incremental constituent roles for that same person or organization. When an existing vendor, for example, wants to become a customer and buy something, the only data elements that need to be added to the system are those that are interesting or necessary for their role as a customer (e.g., payment terms, preferred shipping method, credit limit, etc.). The core constituent properties that identify the organization as unique (name, address, phone/fax numbers, alias, etc.) will already exist in the core constituent record.

It should be emphasized that problems associated with non-consolidation of data are particularly evident in multi-company environments (e.g., an environment wherein a single individual or organization interacts with multiple related organizations). The present invention enables a reduction in data redundancy through a consolidation of core data, sharing of the core data across multiple organization interfaces, and a lookup mechanism that allows a user to see a consolidated list of existing constituents.

Another advantage of the described data organization system is an inherently built-in ability to accurately represent constituent-to-constituent relationships. Based on this ability, software applications can be configured to implement business logic that is appropriate for a given business' processes in order to leverage indications of relationships. Accordingly, constituent relationships can be modeled within a business application in the same manner that they occur in the business world. For example, applications can be configured to include functionality that takes advantage of included indications of relationships between contacts (individuals) and organizations with which they are associated (e.g., employed). In accordance with another embodiment, the data organization system makes it relatively easy to model employee reporting structures within a company for use in any of a variety of business applications (e.g., applications designed for HRMS, requisitions, benefit management, workflow approvals, etc.). In accordance with still another embodiment, relationships between multiple organization constituents that may exist in a parent/child (e.g., national accounts) manner are relatively easy to track and make available for application processing. These are just a couple of examples of many conceivable implementations within the scope of the present invention.

It is worth discussing in more detail that the data organization system of the present invention enables a tracking of relationships between individuals and the companies they represent. An example of a practical environment where such agency-tracking functionality is advantageously applied is any modern business application that provides an organization with one or more logins for use when application interaction is conducted remotely, for example, over the Internet. These logins are typically rooted in the assumption that there will be little if any understanding relative to the identity of any given individual who uses a particular login to perform work on behalf of the organization. Needless to say, this is a security risk for all parties involved in subsequent remote transactions.

FIG. 4, in accordance with one aspect of the present invention, is a block diagram illustrating a data scheme that can be implemented to support a variety of application functions such as, but not limited to, access security based on a tracking of agency relationships. The data structure illustrated in FIG. 4 corresponds to shared constituent records 220 within the data organization system of FIG. 2. Generally speaking, the FIG. 4 data scheme reflects an ability for contacts (e.g., persons or users) to act as individual constituents having their own constituent records (and potentially their own role-specific records). The constituent records of individuals are then connectable to (e.g., can be associated with) one or more related organization constituent records. Within FIG. 4, an organization constituent record 402 is associated with a plurality of contact constituent records that include record 404.

Once connections between an organization constituent and its associated contact constituents are established, it becomes possible to ascertain that 1) a given contact is an individual logging in (e.g., a constituent of the individual type) and 2) they are associated with a particular constituent organization.

In accordance with one embodiment, once an individual logs-in under his/her contact constituent record, that individual will have access, without further log-ins, to associated organization constituent records, as well as role-specific records related to the organization constituent records. In other words, only one log-in is required per use session (e.g., a session may expire or be terminated and the user may be required to log-in again). Subsequent log-ins are generally not required for the purpose of gaining extended or additional access rights. However, in accordance with another embodiment, an administrator can customize access rights for a given individual (or class of individuals). For example, a system can be configured (e.g., by a system administrator) to provide a particular contact with access to some organization role-specific records but not others. In accordance with one embodiment, a specialized security subsystem, such as subsystem 214 in FIG. 2, is implemented to support the described customized distribution of access privileges.

The described agency-based security capability enables organization representatives to have security roles applied to them as users that are specific to tasks that they need to perform within the application. This enables multiple users from a single organization constituent (e.g. customer or vendor) to login and do work in association with access rights that are relevant to their respective roles within the trading partner organization. Access for a given organization can essentially be distributed on a user-specific basis.

In other words, when an individual constituent who is a contact for an organization constituent is granted security privileges upon login, an agency relationship is formed for that individual constituent. What this essentially means is that when an agent then performs work as a customer or vendor within the application, they will be creating transactions and viewing data related to the organization they represent. The described agency-tracking framework enables multiple constituent representatives (agents) of a constituent trading partner (e.g., customer/vendor) to be able to login to a system and perform a set of tasks that are relevant to them on an individual basis. Through application of user security role restrictions to a given user constituent, transactions can be limited to those relevant for a customized user security role. In accordance with one embodiment, a single contact constituent record can be associated with multiple organization constituent records for multiple lines of data access.

In accordance with one embodiment, an automatic inheritance functionality is built into the system. For example, consider a scenario wherein all contact constituent records on the level of record 404 list an office address that is the same as an address listed in organization constituent record 402. Suppose the organization changes its address. It is within the scope of the present invention to configure the system to automatically change the address listed in the contact records when the address of the organization is changed. This eliminates the need to change all the contact records individually. This is just one example of the nature of the inheritance functionality.

Still another advantage of the described overall data organization system is a general simplified consolidation of information about a particular individual or organization. Through implementation of a single core constituent record that binds multiple different constituent roles that person or organization plays, it is quite easy to consolidate information regarding varied business transactions. Business applications that implement the constituent subsystem will be able to easily generate aggregate reports for a constituent, such as consolidated accounts receivable/accounts posted statements for a constituent who is both a customer and a vendor. For example, if as a customer a constituent has a large outstanding balance, and as a vendor is owed money, an application can easily be configured to determine and provide the net-value of a constituent as a customer and a vendor. Additionally, when an individual or organization does business with more than one organization associated with the same data accessing subsystem, it becomes particularly easy to calculate a combined net value to the overall enterprise.

In general terms, providing a central store of individuals and organizations that are relevant to a business application system enables more reuse of data when a single constituent plays multiple roles within the application environment (e.g., a customer who is also a vendor). Additionally, the knowledge that two parties are actually the same organization taking on different roles enables business applications implementing the described constituent model to perform a number of functions that were previously cumbersome and, in some cases, impossible. Additionally, because the described model enables individuals to be distinguished from organizations, it enables applications to extend the concept of "generic user" to that of a trading partner (e.g., a customer or vendor) in a way that allows multiple unique logins for a single external organization.

FIG. 5, in accordance with one aspect of the present invention, is one example of a high-level data object architecture related to the described data organization system. The architecture is generally centered around one data object called constituent, which is labeled 502. Constituent object 502 contains core information that is shared across a plurality of roles (customer, supplier, user, employee, etc.). The subjective nature of the content of object 502 is not critical to the present invention, however, it will most typically contain basic information such as addresses, phone numbers, contacts, electronic communication details, identity details and the like. It may also contain an identification of one or more contacts, which generally are other entities (e.g., individuals) associated with (e.g., employed by or authorized to represent) the constituent.

The nature of constituent object 502 can be specialized. In accordance with one embodiment, there are at least three different kinds of specialized constituent object types configured to represent at least three different kinds of specialized constituents. The three specialized constituent object types include an internal organization object type 504, an external organization object type 506 and an individual object type 508. Each of these different specialized object types is illustratively configured to manage data in a customized format. Support of specialized constituent objects reflects the fact that certain types of constituents will predictably be associated with different data transactions. Of course, specialized constituent object types other than those specifically described herein can be supported without departing from the scope of the present invention.

In accordance with one embodiment, a constituent object is available to be extended to one or more related role objects. In other words, the data in a constituent object is available to an extended related role object. Constituent role entity 510 is illustratively a buffer point that supports extension of constituent object 502 to one or more of related role objects 512-518. Constituent role entity 510 essentially serves as an interface for objects 512-518 to the constituent object 502. In accordance with one embodiment, constituent role entity 510 manages data components that are common to objects 512-518, such data components derived from constituent object 502.

In FIG. 5, contacts are listed as an attribute of object 502. It is worth noting that a contact can also or alternatively be on the same level as role objects 512-518. For example, a contact can be another role object connected to constituent object 502 through constituent role entity 510.

In accordance with one example, a user views data in association with a customer 512 object. The object 512 includes information specific to a customer relationship. Without further log-ins, the user can also view data in the constituent 502 object, such as phone numbers and the like. In accordance with one embodiment, assuming the user has appropriate security privileges, the user can also view the data records associated with any of the other role-specific objects 514-516 without further log-ins.

In accordance with one embodiment, the system is pre-configured to support standard formats for a core set of specialized constituent object types such as individual, internal organization, and external organization, as well as a core set of role types such as user, customer, supplier and employee. In accordance with another embodiment, however, the system is extensible in the sense that customized constituent objects and constituent role types can be created and integrated into the core constituent system.

In accordance with one aspect of the present invention, the FIG. 5 system is tied together by an ability to identify a constituent and identify related roles. A table look-up mechanism 520 illustratively provides look-up functionality to assist in the identification of constituent-role associations. Each role object 512-518 is illustratively linked to at least one constituent object 502. These links are reflected, for reference purposes, in the data associated with table 520. Table 520 is illustratively equipped to function as an application subsystem that influences information provided to a user through a user interface.

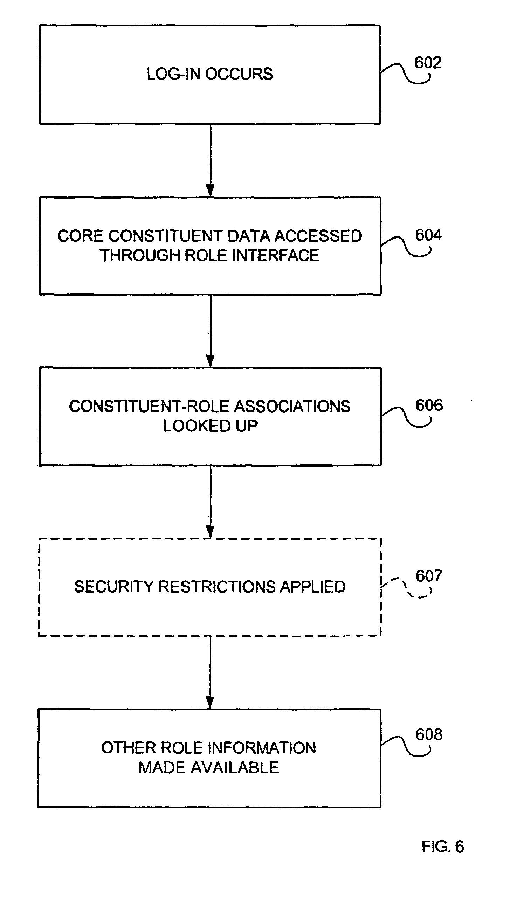

FIG. 6, in accordance with one aspect of the present invention, is a flow chart illustrating steps associated with data access in association with the FIG. 5 data architecture. In accordance with block 602, a user logs into a software application and thereby associates at least one of roles 512-518 with the relevant log-in account (e.g., through look-up in table 520). In this manner, log-in occurs through at least one of roles 512-518. For example, log-in may occur through the user 516 role, thereby opening access to user 516 role information and transactions. Reference is then made to table 520 to determine the associated constituent object. In accordance with block 604, access is extended to associated constituent 502 information and transactions. Once the constituent identity is known, in accordance with block 606, other available roles can be determined based on the data in table 520. In accordance with block 608, other role information and transactions are made available.

As was described in relation to FIG. 4, security restrictions can be implemented in order to enable a system administrator to distribute access rights in a customized manner. Security subsystem 214 is shown in the FIG. 5 architecture as being connected to association table mechanism 520. In accordance with one embodiment, and in accordance with block 607 in FIG. 6, the security features described herein can be implemented through, or in association with, the table 520 mechanism. For example, when reference is made to table 520 to determine access rights, the results can be manipulated by security subsystem 214 based on, for example, a particular logged-in user. In accordance with one embodiment, security subsystem 214 contains security rules that are applied through the table 520 mechanism to provide the security functionality.

In accordance with one embodiment, the overall system is configured to distribute access rights on a user-by-user basis. Under these circumstances, if you are not a user, then you have no need for security rights. A system administrator illustratively is able to associate a given user account with an organization constituent (e.g., an agency association) on a customized basis, and is able to impose access restrictions through subsystem 214 on a customized basis. It should be noted that access restriction customization can be general (e.g., all customers have the ability to access order information) or specific (Ted Wilson does not have the ability to access order information). When a given user logs-in, reference is made to table 520 to determine available roles, agency relationships, roles available based on agency relationships, and applicable access restrictions. In accordance with one embodiment, once a user has logged-in, additional log-ins for subsequent access will generally not be necessary. The user can move through all available resources based on a single log-in.

Business software applications that enable a user to model an organizational structure are known in the art. Such applications typically support a division of an organization into multiple departments (e.g., sales, financing, etc.) and/or multiple companies (e.g., parents, subsidiaries, etc.). In accordance with one embodiment of the data organization system of the present invention, the items above line 540 in FIG. 5 can be assigned in a customized manner to departments, companies or other organizational divisions within a single enterprise. For example, a system administrator can link a certain customer role object (and thereby an affiliated constituent record) to one or more particular subsidiary companies. In accordance with one embodiment, contact objects can also be so assigned such as for access security purposes. Accordingly, in addition to being a child of a constituent, a contact can effectively be a constituent themselves, this giving them the ability to have the same behavior as any other constituent.

An example will illustrate some of the advantages to the ability to assign role objects. A particular user's contact record is assigned to company constituent objects A and B but not to company constituent objects C or D. A particular customer's record 512 is assigned to companies C and D but not to companies A and B. Accordingly, the user will not be able to gain access to the related customer's record 512. This is just one of many examples within the scope of the present invention.

In accordance with one aspect of the present invention, it is the role objects (e.g., 512-518) that are linked into the enterprise system. The constituent objects (e.g., 502) are not linked or associated anywhere and will exist throughout the enterprise organization structure. Accordingly, in the context of the agency-based security system described herein, access to constituent objects is not filtered based on a given user log-in as it is with role objects.

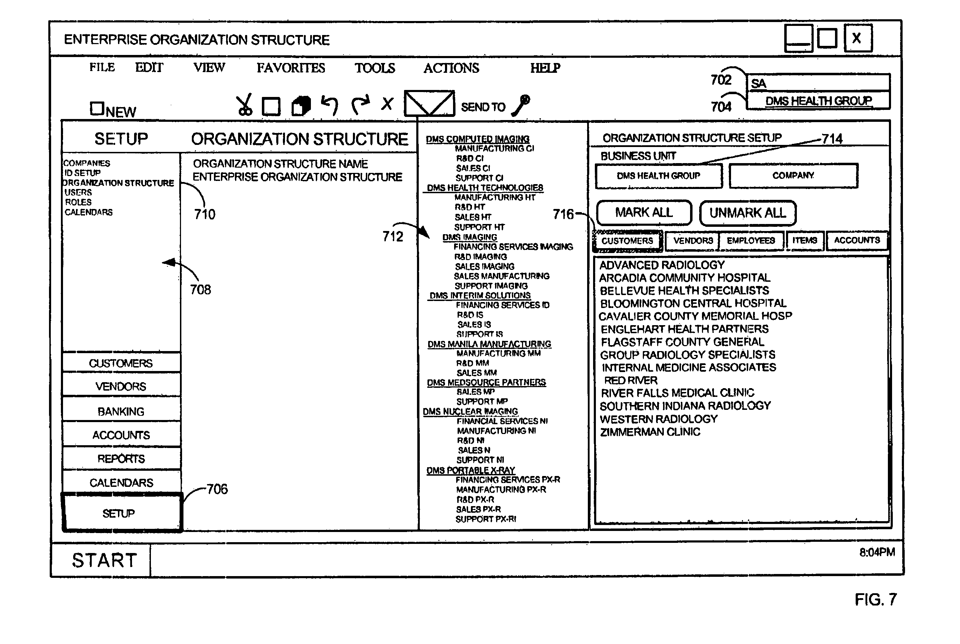

FIG. 7 is one example of a screen shot associated with a business software application that enables a user to model an organizational structure, wherein the application implements embodiments of the data organization system described herein. As is indicated by status indicators 702 and 704, a system administrator ("SA") associated with an enterprise called "DMS HEALTH GROUP" has logged-into the application.

The SA illustratively manipulates an input device so as to select setup tab 706, thereby initiating access to a setup menu 708. The SA selects the organization structure setup option 210 in order to call up an enterprise organization structure listing 712. The enterprise (DMS HEALTH GROUP) is illustratively comprised of the numerous legal entities (e.g., company groups) in listing 712. In accordance with one embodiment, the SA can select an option in order for listing 712 to be presented in an alternative graphical format (e.g., a block diagram).

In block 714, the SA illustratively enters a business unit or company for which information is desired for manipulation and/or informative purposes. In the illustrated example, the overall enterprise DMS HEALTH GROUP has been selected. The selected unit could just as easily been one of the organizations presented in listing 712. Once a business unit is selected, one of the illustrated tabs associated with customers, vendors, employees, items or accounts can be selected to call up corresponding information in area 718 for the selected business unit or company. In FIG. 7, the SA selects customer tab 716 in order to call up a list of customers associated with DMS HEALTH GROUP. The SA could just have easily entered "DMS INTERMUM SOLUTIONS" in blank 714 and selected tab 716 to call the subset customer list to area 718. The assignment of customers to companies/business units becomes apparent. It is assumed that the SA is provided with the capability to manipulate the nature of these and similar assignments (e.g., assignments of vendors, accounts, etc.).

In accordance with one embodiment, the records that are called to appear in area 718 represent role objects that are each connected to a related constituent object. In accordance with one embodiment, the records that appear in area 718 are limited based on security rights assigned to a given logged-in user. The SA illustratively has unlimited access rights, and assumedly is provided with the capability to manipulate security system settings so as to distribute access rights in a customized manner. As an example, in light of restrictions implemented by an access security system, a logged-in user other than the SA might be presented with a more limited customer list in area 718 than the list provided to the SA in FIG. 7. Data is illustratively filtered based on role objects. In accordance with one embodiment, the security system is configured such that user accounts can directly or indirectly be assigned to business units or entities such that access to role objects for a given company is granted categorically to assigned user accounts.

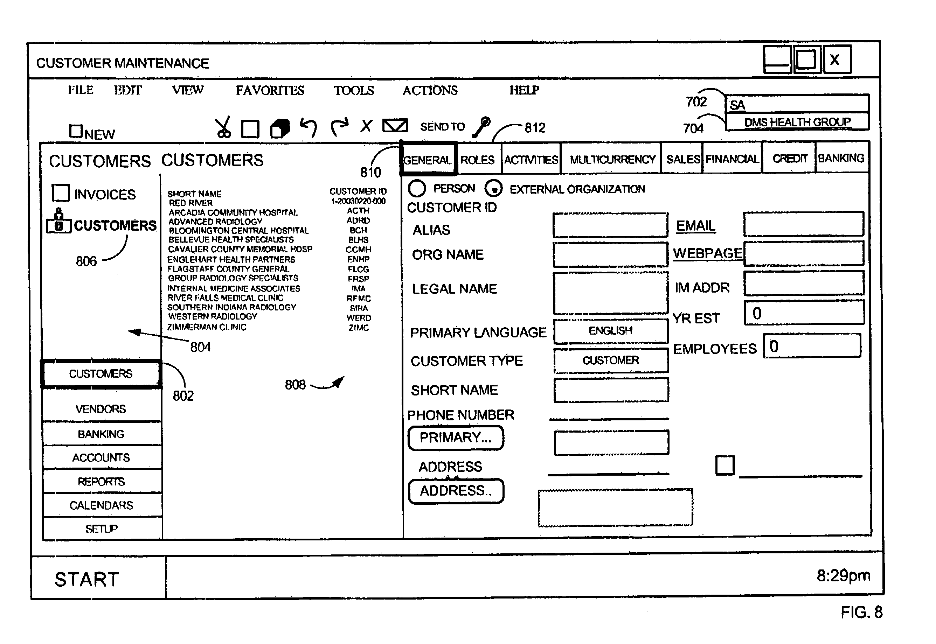

As a continuation of the FIG. 7 example, FIG. 8 is an additional example screenshot. The SA selects the "CUSTOMERS" tab 802 in order to display a customer menu 804. The SA then selects the customers link 806 in order to pull up a listing 808 of customers for DMS HEALTH GROUP. The tabs on the right half of the display (i.e., GENERAL, ROLES, ACTIVITIES, MULTICURRENCY, SALES, FINANCIAL, CREDIT, BANKING) are informational tabs that together embody the customer role data set for a given customer. For example, one of the customers in listing 808 could be selected, and any of the informational tabs could then be selected in order to display tab-specific information for the selected customer. In accordance with one aspect of the present invention, some of fields associated with the tabs will be filled based on centrally maintained constituent object data. Assuming authorization to do so, the logged-in user can manipulate the customer role information associated with the tabs. While manipulating role-specific fields will have no effect outside of the then accessed role context, manipulating other fundamental fields (e.g., customer address) will change the underlying constituent object data, thereby updating the data for other associated roles. It should be noted that ROLES tab 812 can be selected to display the role objects assigned to the underlying constituent. A "save" function can illustratively be selected to save data manipulations.

In accordance with one embodiment, the SA (or some other authorized user) can create a new record by simply selecting an "add new" function and filling in blanks associated with a clean set of tabs. In accordance with one embodiment, a set of tab blanks customized to a given situation can be obtained, for example by designating the new record as a "PERSON", "EXTERNAL ORGANIZATION", INTERNAL ORGANIZATION", etc. In accordance with one embodiment, a searching mechanism is implemented in order to recognize whether the new information being entered is associated with information already on file. For example, if a user is entering in a new customer that was previously entered as a vendor, at least the constituent object data can be retrieved and automatically entered in order to alleviate some of the burden of data entry. In accordance with one embodiment, at least one of the tabs enables the user to assign the newly created role to one or more business units or companies, such as any of those illustrated in the listing 712 in FIG. 7. Selection of the "ROLES" tab illustratively presents all the roles and association business units or companies for a given underlying constituent. Once a new record has been created, a "save" function can illustratively be selected to save data changes.

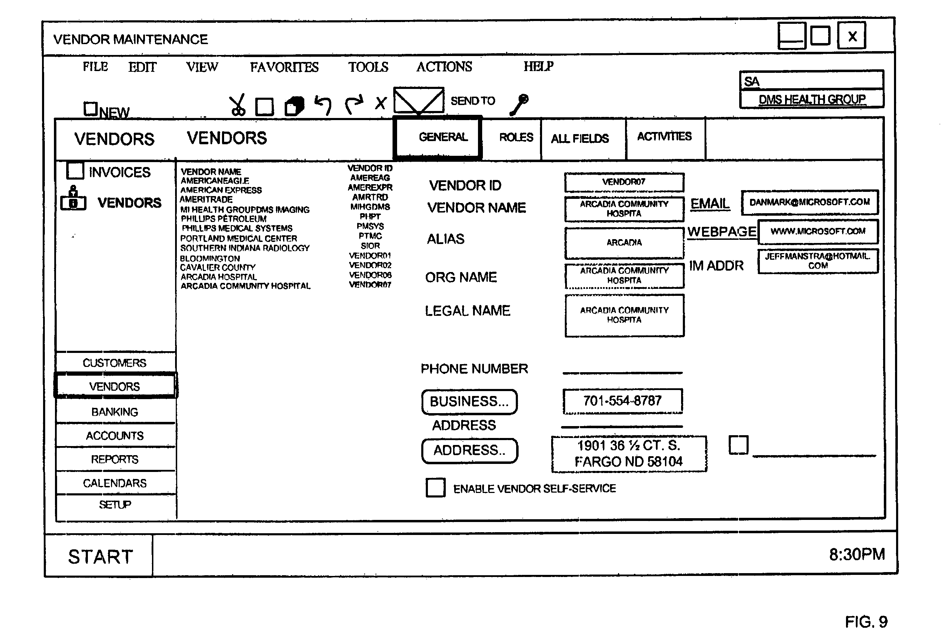

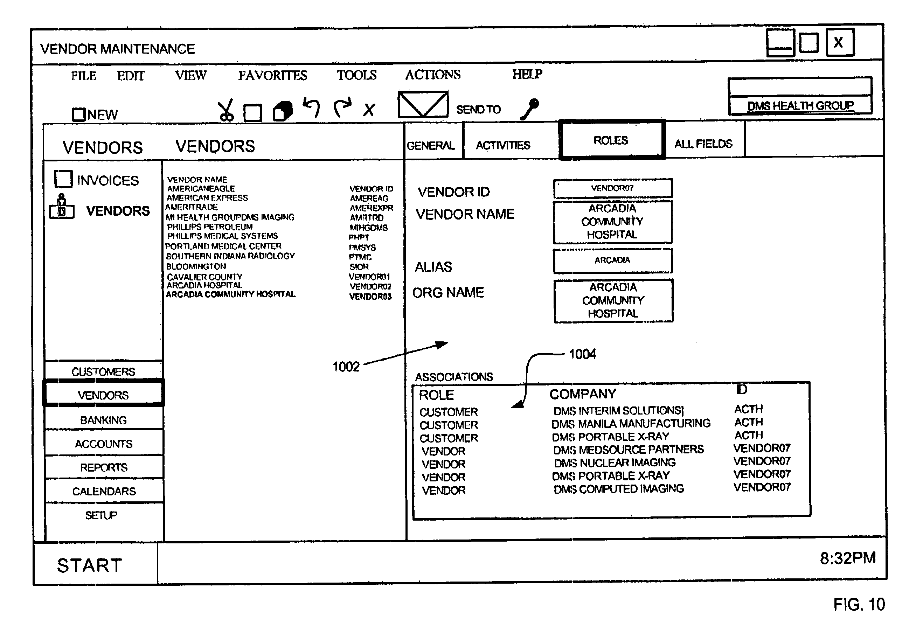

FIG. 9 is another exemplary screen shot wherein a VENDORS view has been selected instead of a CUSTOMERS" view. The vendor "Arcadia Community Hospital" has been selected and corresponding information is displayed in association with the selected "GENERAL" tab. FIG. 10 is another exemplary screen shot wherein the ROLES tab has been selected for the designated vendor (Arcadia Community Hospital). The roles tab display 1002 includes a listing 1004 of roles that the designated vendor plays in the system, including the assignments of roles to business units and companies.

The various data organization embodiments of the present invention enable several high-level application features that are also part of the present invention and are worthy of additional description. For example it is worth emphasizing that it is within the scope of the present invention that a system be configured to enable a user to create constituent roles for use within a business application. In other words, a user can create a constituent role for any of a number of interactive capacities. The system need not be limited to pre-customized roles such as customer, vendor, worker (employee), salesperson, user or the like. Once created, a constituent role can be utilized to extend constituent objects to the new interactive capacity.

It should also be emphasized that it is within the scope of the present invention that a system be configured to create/modify/delete the core constituent information (i.e., data associated with the constituent object) when a constituent role object is created/modified/deleted. In other words, creation of a role object initiates creation of a corresponding constituent object. Or, modification of a role object initiates modification of a corresponding constituent object, and so on and so forth.

Another feature within the scope of the present invention is the merging of constituent objects. Such a merger might be desirable, for example, when two constituent objects get created for the same organization or individual. For example, a customer might accidentally get entered twice so as to create two separate constituent records. It is within the scope of the present invention for a system to be configured so as to enable a user to select two constituent objects to be merged. In accordance with one embodiment, the user picks one of the records to survive. The other record is eliminated following the merger. Prior to the elimination, data is pushed into the surviving record in order to update it with current information. For example, if the record to be eliminated has an address that the surviving record does not, than the address will be updated to the surviving record. Rules can be implemented to handle information conflicts as necessary (e.g., a user can be prompted to resolve information inconsistencies).

There is at least one specific scenario wherein merger functionality is applicable. As an example, consider a user that sets up a new customer role record (and corresponding constituent role record) without assigning it to an existing supplier having the same underlying constituent identity (e.g., the new customer and the existing supplier are the same constituent entity). When the error is recognized, it becomes desirable to merge the two constituent records together such that the customer role object and the supplier role object will point to (i.e. be assigned to) the same constituent object. Accordingly, a merger is effectuated and the constituent-role association table is updated accordingly.

It is worth mentioning that it is within the scope of the present invention to configure a system such that a user is able to copy constituent role properties from one constituent to another existing or new constituent record. For example, similar to a merge, a user is able to copy information to eliminate data entry (i.e., as a starting point) for a new or existing record.

It is also worth mentioning that it is within the scope of the present invention to configure a system such that an indicator can be inserted into a role object so as to point to data in the associated constituent object. This eliminates the need to store the same data in both the constituent and role objects. For example, suppose a constituent's main address is stored in the constituent object. In a vendor object associated with the same constituent, there is illustratively a "remit to" address property that can be filled in. it is within the scope of the present invention to store a pointer back to the main address in the constituent record rather than re-storing the address in association with the vendor role record. An addition reference "ship to" in a related customer role object can point to the same main address in the constituent object.

The constituent data organization subsystem described herein provides a means to track organizations and individuals as unique entities, as well as to manage the diffuse and context-dependent ways in which they represent themselves. An organization that is external to the application domain is reified as an "EexternalOrganization". An organization or subdivision of an organization that is internal to the application domain is reified as an "InternalOrganization". An individual human being is reified as a Person. ExternalOrganization, InternalOrganization and person are all Constituents. The Constituent itself carries little or no knowledge of how it relates to the system other than the fact that it is tracked by the system. All of the ways in which a Constituent is represented in the system are considered roles that the Constituent is in, and each of these types in the system is considered a ConstituentRole (such as "Vendor" or "Employee"). Each ConstituentRole is physically manifested in the system as a Business Entity whose instances store domain specific information about their corresponding Constituent. In accordance with one embodiment, given a particular representation of an organization/person in the system, a user can find other representations of that same organization/person, even if it crosses module boundaries or into vertical solutions.

Each Constituent may contain one or more contacts. A Contact is a Person that has a relationship to the Constituent that needs to be tracked by the system (such as an employee's dependent, or a customer's agent). A security system can be implemented to distribute access rights in a customized manner based on tracked system characteristics such as Contact relationships (i.e., agency preferences). Embodiments of the described system enable ExternalOrganization or Persons to log into an application system as users. These user accounts can be tied to representations of other organizations/persons represented in the system in order to implement application policies that reflect application policy related to security and business logic.

With regard to embodiments of the constituent subsystem described herein, Appendix A attached hereto contains a sample collection of interface design components.

Although the present invention has been described with reference to particular embodiments, workers skilled in the art will recognize that changes may be made in form and detail without departing from the spirit and scope of the invention.

## Claims

1. A computer-implemented method of configuring data for access by a user, comprising:
obtaining a core data set that represents a constituent;
obtaining a role-specific data set that represents a role assumed by the constituent;
storing the core and role-specific data sets so as to distinguish the core data set from the role-specific data set.

2. The method of claim 1, wherein storing comprises storing the core data set and the role-specific data set separate from one another.

3. The method of claim 2, wherein obtaining a role-specific data set further comprises obtaining a role-specific data set that only contains data that is different than the data stored in the core data set.

4. The method of claim 1, further comprising:
obtaining a second role-specific data set that represents a second role assumed by the constituent; and
storing the core, role-specific and second role-specific data sets so as to distinguish the data sets from one another.

5. The method of claim 4, further comprising storing the second role-specific data set so as to be separate from said role-specific data set and the core data set.

6. The method of claim 5, wherein obtaining a second role-specific data set comprises obtaining a second role-specific data set that only contains data that is different than the data stored in the role-specific and core data sets.

7. The method of claim 1, wherein obtaining a role-specific data set that represents a role further comprises obtaining a role-specific data set that represents a role selected from the group consisting of customer, supplier, user, employee and contact.

8. The method of claim 1, further comprising determining whether the user has access to the role-specific data set.

9. The method of claim 8, wherein determining whether the user has access comprises filtering user access, based on a characteristic of the user, to a plurality of role-specific data sets that include said role-specific data set.

10. The method of claim 9, wherein filtering user access comprises filtering user access without requiring the user to log-in more than once per session of use.

11. The method of claim 9, wherein filtering based on a characteristic comprises filtering based on the identity of the user.

12. The method of claim 9, wherein filtering based on a characteristic comprises filtering based on a role assumed by the user.

13. The method of claim 9, wherein filtering based on a characteristic comprises filtering based on at least one security rule set by a system administrator.

14. The method of claim 9, wherein filtering base on a characteristic comprises filtering based on an agency relationship between the user and an organization.

15. The method of claim 1, further comprising creating an association between the role-specific data set and one or more organizational divisions within an enterprise.

16. The method of claim 15, further comprising determining, based at least in part on the association, whether the user has access to the role-specific data set.

17. The method of claim 16, wherein determining whether the user has access comprises filtering user access, based at least in part on the association, to a plurality of role-specific data sets that includes said role-specific data set.

18. The method of claim 17, wherein filtering user access comprises filtering user access without requiring the user to log-in more than once per session of use.

19. The method of claim 1, wherein obtaining a core data set that represents a constituent further comprises obtaining a core data set that represents an internal organization constituent.

20. The method of claim 1, wherein obtaining a core data set that represents a constituent further comprises obtaining a core data set that represents an external organization constituent.

21. The method of claim 1, wherein obtaining a core data set that represents a constituent further comprises obtaining a core data set that represents a constituent that is an individual person.

22. The method of claim 1, wherein obtaining a core data set that represents a constituent further comprises obtaining a core data set having any one of a plurality of specialized formats.

23. The method of claim 1, wherein obtaining a role-specific data set that represents a role assumed by the constituent comprises obtaining a role-specific data set having a format that is customized to the role assumed by the constituent.

24. A computer-implemented method for distributing access rights, comprising:
receiving a set of log-in information;
identifying, based on the log-in information, a contact record;
identifying an association between an organization record and the contact record; and
selectively providing access based at least in part on the association.

25. The method of claim 24, wherein identifying an association comprises identifying an employment association between an individual affiliated with the contact record and an employer affiliated with the organization record.

26. The method of claim 25, wherein selectively providing access further comprises providing access to the organization record when the association is an indication that the individual is employed by the employer.

27. The method of claim 26, wherein selectively providing access further comprises providing access to role-specific records related to the organization record when the association is an indication that the individual is employed by the employer.

28. The method of claim 27, wherein providing access to role-specific records comprises selectively providing access to role-specific records based at least in part on a plurality of access security rules.

29. The method of claim 28, wherein selectively providing access to role-specific records based at least in part on a plurality of access security rules comprises selectively providing access to role-specific records based at least in part on a plurality of access security rules selectively configured by a system administrator.

30. The method of claim 28, wherein selectively providing access to role-specific records based at least in part on a plurality of access security rules comprises selectively providing access based at least in part on a plurality of access security rules that distribute access rights based on an identity characteristic of the individual.

31. The method of claim 28, wherein selectively providing access to role-specific records based at least in part on a plurality of access security rules comprises selectively providing access based at least in part on a plurality of access security rules that distribute access rights based on a role assumed by the individual.

32. A system for organizing business data for access by a user, the system comprising:
a data management component for receiving data and distributing it into a plurality of constituent and role-specific records;
a constituent-role association component for maintaining a record of relationships between constituent and role-specific records; and
a security subsystem for distributing access rights based at least in part on the record of relationships.
